# EUROPÄISCHE PATENTSCHRIFT

(11) **EP 1 291 328 B1**
(45) Veröffentlichungstag und Bekanntmachung des Hinweises auf die Patenterteilung: **16.03.2011**
(21) Anmeldenummer: 02027439.5
(22) Anmeldetag: 21.01.2002
(51) Int. Cl.: C03B 11/06, C03C 10/14, C03B 11/08, C03B 32/02

(54) **Verfahren zur Herstellung eines Trägermaterials für eine Spiegelschicht**
Method for the production of a substrate material for a mirror film
Méthode de production d'un matériau substrat pour une couche miroir

(30) Priorität: 02.03.2001 DE 10110225
(43) Veröffentlichungstag der Anmeldung: 12.03.2003
(62) Teilanmeldung aus: 02001405.6
(73) Patentinhaber: Schott AG, 55122 Mainz (DE)
(72) Erfinder: Siebers, Friedrich, 55283 Nierstein (DE); Beudt, Hans-Werner, 65187 Wiesbaden (DE); Sprenger, Dirk, 55271 Stadecken-Eisheim (DE)
(74) Vertreter: Gahlert, Stefan

(56) Entgegenhaltungen:
- EP-A- 0 508 131
- DE-A- 19 939 787
- GB-A- 501 865
- US-A- 1 578 448
- PATENT ABSTRACTS OF JAPAN vol. 1997, no. 06, 30. Juni 1997 (1997-06-30) & JP 09 048626 A (NAMIKI PRECISION JEWEL CO LTD), 18. Februar 1997 (1997-02-18)
- PATENT ABSTRACTS OF JAPAN vol. 014, no. 459 (C-0767), 4. Oktober 1990 (1990-10-04) & JP 02 188432 A (HITACHI LTD), 24. Juli 1990 (1990-07-24)
- PATENT ABSTRACTS OF JAPAN vol. 017, no. 259 (C-1061), 21. Mai 1993 (1993-05-21) & JP 05 004824 A (MATSUSHITA ELECTRIC IND CO LTD), 14. Januar 1993 (1993-01-14)

## Beschreibung

Die Erfindung betrifft ein Verfahren zur Herstellung eines Trägermaterials für eine Spiegelschicht,

Es ist bekannt, dass sich Gläser aus dem System Li₂O-Al₂O₃-SiO₂ in Glaskeramiken mit Hochquarz-Mischkristallen und/oder Keatit-Mischkristallen als Hauptkristallphasen umwandeln lassen. Die Herstellung dieser Glaskeramiken erfolgt in mehreren Stufen. Nach der Schmelze und Heißformgebung wird das Material üblicherweise bei Temperaturen in der Gegend der Transformationstemperatur (Tg) gekühlt, um thermische Spannung zu entfernen. Das Material wird weiter auf Raumtemperatur abgekühlt. Der Glaskörper wird hinsichtlich seiner spezifizierten Qualitätsmerkmale untersucht.

Mit einer zweiten gesteuerten Temperaturbehandlung wird das Ausgangsglas kristallisiert und in einen glaskeramischen Artikel überführt. Diese Keramisierung erfolgt in einem mehrstufigen Temperaturprozess, bei dem zunächst durch Keimbildung bei Temperaturen von 600°C bis 800°C Keime aus TiO₂- oder ZrO₂/TiO₂-Mischkristallen erzeugt werden. Auch SnO₂ kann an der Keimbildung beteiligt sein. Bei der anschließenden Temperaturerhöhung wachsen bei der Kristallisationstemperatur von 700°C bis 900°C Hochquarz-Mischkristalle auf diesen Keimen auf. Bei weiterer Temperaturerhöhung im Bereich von 800°C bis 1100°C wandeln sich diese Hochquarz-Mischkristalle weiter in Keatit-Mischkristalle um. Der Stabilitätsbereich der Hochquarz-Mischkristall enthaltenden Glaskeramik ist je nach Zusammensetzung ausgedehnt. Bei einigen Zusammensetzungen liegt die Umwandlungstemperatur in die Keatit-Mischkristallphase bis zu 150°C oberhalb der Kristallisationstemperatur der Hochquarz-Mischkristall-Glaskeramik. Bei anderen Zusammensetzungen wandeln sich die Hochquarz-Mischkristalle fast übergangslos in Keatit-Mischkristalle um. Glaskeramiken mit Hochquarz-Mischkristallen sind transparent darstellbar. Die Umwandlung in Keatit-Mischkristall ist mit einem Kristallwachstum, daher mit zunehmender Kristallitgröße, verbunden. Hierdurch erfolgt zunehmend Lichtstreuung. Die Lichttransmission wird zunehmend verringert. Der glaskeramische Artikel erscheint dadurch zunehmend transluzent und schließlich opak. Die hohe Lichttransmission der Gläser und Glaskeramiken ermöglicht eine effektive Qualitätsbeurteilung. Formkörper mit Defekten, die sicherheitsrelevant sind oder die spezifizierten Produkteigenschaften gefährden, können vor weiteren Prozessschritten aussortiert werden.

Eine Schlüsseleigenschaft dieser Glaskeramiken ist Herstellbarkeit von Werkstoffen, die über einen äußerst niedrigen Wärmeausdehnungskoeffzienten im Bereich von 20 °C bis 300 °C und darüber von < 1,5 · 10⁻⁶/K verfügen. Mit Glaskeramiken, die Hochquarz-Mischkristalle als Hauptkristallphase enthalten, werden in diesem Temperaturbereich sogar Werkstoffe mit nahezu Nullausdehnung erhalten. Für die Verwendung als Trägermaterial für astronomische Spiegel werden Glaskeramiken so modifiziert, dass ihre thermische Nullausdehnung in dem für diese Anwendung wichtigen Temperaturbereich von - 50 °C bis + 50 °C liegt. Ein solches Glaskeramikmaterial wird unter der Bezeichnung ZERODUR bei SCHOTT GLAS produziert.

Neuerdings werden diese Glaskeramiken auch in der Lichttechnik als Material für Reflektoren bei Anwendungen eingesetzt, bei denen es aufgrund der Miniaturisierung und hohen Lichtleistungen zu hohen thermischen Belastungen kommt. Gegenüber den verbreiteten Reflektoren aus Borosilikat- oder Aluminosilikatglas genügen diese Glaskeramiken höchsten Anforderungen hinsichtlich der Temperaturbelastbarkeit und Temperaturgradientenfestigkeit. In den Reflektoren werden Lichtquellen eingesetzt, die es gestatten, in einem kleinen Volumen hohe Lichtstärke zu erzeugen. Die Lichtquellen basieren auf dem technischen Prinzip von leistungsstarken Halogenlampen, Lichtbogen- oder Gasentladungslampen. Das Strahlungsmaximum dieser Höchstleistungslampen liegt bei Wellenlängen von 1 µm, daher im nahen Infrarot.

Diese Glaskeramiken können mit metallischen Schichten, wie Aluminium oder mit alternierenden Schichtsystemen aus oxidischen Substanzen beschichtet werden. Die oxidischen Mehrfachschichten arbeiten nach dem Interferenzprinzip und erlauben es, das sichtbare Licht zu reflektieren und die auftreffende Infrarotstrahfung nach hinten durchzulassen. Dabei soll das Trägermaterial eine hohe IR-Transmission besitzen, damit es die IR-Strahlung nach hinten durchlässt und sich dabei nicht unzulässig erwärmt. Reflektoren dieses Typs werden als Kaltlichtreflektoren bezeichnet. Digitale Projektionsgeräte und DVD- oder Videorecorder-Projektionsgeräte sind zunehmend mit Glaskeramik-Kaltlichtreflektoren ausgestattet.

Glaskeramiken, die als Spiegelträger in der Astronomie verwendet werden, sind in DE-A-1902432 und US-A-4285728 beschrieben. Die Formgebung wird durch Gießen der Glasschmelze in eine feuerfeste Form erzeugt. Vor der Verspiegelung werden die nach der Kristallisation erhaltenen Glaskeramiken mit Hochquarz-Mischkristall als vorherrschende Kristallphase zunächst geschliffen und dann poliert. Dieses Verfahren führt zur gewünschten geometrischen Kontur und niedrigen Oberflächenrauhigkeit. Es ist jedoch zeit- und kostenintensiv.

In JP-B-95037324 werden Glaskeramiken aus Hochquarz- oder Keatit-Mischkristallen für die Verwendung als reflektierende Spiegelträgermaterialien beschrieben, die nach dem Keramisieren auch ohne Politur über eine niedrige Oberflächenrauhigkeit Ra von höchstens 0,03 µm verfügen, und eine Zusammensetzung in Gew.-% mit 50-65 SiO₂, 18-30 Al₂O₃, 3-8 Li₂O, 3-5 TiO₂+ZrO₂, 0,3-7 RO (R = Mg, Ca, Zn, Pb or V) und bis zu 3 R₂O (R = K, Na) aufweisen.

In US-A-4438210 werden transparente Glaskeramiken mit Hochquarz-Mischkristall als vorherrschender Kristallphase beschrieben, die trotz vergleichsweise hoher Fe₂O₃-Gehalte von bis zu 1000 ppm im wesentlichen farblos sind. Die Zusammensetzung der Glaskeramiken weist in Gew.-% aus 65-75 SiO₂, 1-4 Li₂O, 15-25 Al₂O₃, 0,5-2 ZnO, 0-2 Na₂O und/oder K₂O, 2-6 TiO₂, 0-2 ZrO₂, 0-2,5 BaO, 0-1,2 F und 100-1000 ppm Fe₂O₃ auf.

Aus der US-A-1,578,448 ist ein Verfahren zum Pressen von Glasrohlingen bekannt, mit dem die Auswirkungen des Schrumpfverhaltens vermieden werden sollen, indem die Formtemperatur an der Formgebungsfläche zunächst höher gehalten wird, so dass die Schrumpfung von der Seite eingeleitet wird, die der Formgebungsfläche abgewandt ist.

Gemäß der GB-A-501 865 ist ein weiteres Verfahren zum Pressen von Glas in einer Form bekannt, bei dem diejenigen Teile der Form, die optisch wichtige Gebiete des Presslings berühren, deutlich stärker gekühlt werden, als diejenigen Flächen der Form, die optisch weniger bedeutend sind, so dass das Glas, das die kühleren Flächen der Form berührt, vorher erstarrt, bevor der andere Anteil des Presslings erstarrt.

Aus Patent Abstracts of Japan Volume 1997, Nr. 6, 30. Juni 1997 (1997-06-30) und JP 09 048 626 ist es bekannt, Glas teilweise in einer Fleckenfarbe einzufärben, indem kristallisiertes Glas als ein Glasmaterial verwendet wird und ein spezieller Teil des gepressten Glases beheizt wird. Hierzu wird ein aus Li₂O-Al₂O₃-SiO₂ bestehendes Glas, dem ein Keimbildner, wie etwa TiO₂, zugesetzt ist, im glasigen Zustand als ein Glasbasisrohmaterial zu einem Deckmaterial geschnitten, bei ungefähr 300°C vorgeheizt in einer Pressform in Rotation versetzt, auf ungefähr 400°C aufgeheizt und ein Umfangsteil kontinuierlich weiter aufgeheizt bis sich bei niedriger Umdrehungsgeschwindigkeit ein erweichter Zustand bei ungefähr 830°C einstellt. Hierauf kann nun eine Pressform aufgepresst werden, wodurch sich dann ein Deckglas mit einem transparenten mittigen Teil und einem milchigweißen kristallisierten Umfangsteil ergibt.

Aus der EP-A-0 508 131 ist ferner ein Verfahren zum formnahen Pressen von dünnen Glaskeramikprodukten bekannt, die eine weitgehend gleichförmige Dicke und parallele gegenüberliegende Flächen aufweisen. Hierbei werden zwei einander gegenüberliegende Formflächen auf vorbestimmte unterschiedliche Temperaturen vorgeheizt, und dann dazwischen ein Pressling erzeugt, wobei die Pressbedingungen so gewählt werden, dass beide Seiten der Form im Wesentlichen die gleiche Temperatur annehmen, so dass sich eine symmetrische Wärmeabfuhr von beiden Seiten einstellt. Der Pressling wird anschließend durch eine weitere Temperaturbehandlung in ein Glaskeramikprodukt überführt.

Gemäß Patent Abstracts of Japan Volume 14, Nr. 459 (C-0767), 4. Oktober 1990 (1990-10-04) und JP 02 188 432 A wird das Basismaterial einer Form aus gesintertem Hartmetall, die Wolframcarbid als eine Hauptkomponente aufweist, mittels eines CVD-Verfahrens gleichförmig mit Wolframcarbid beschichtet. Diese Form wird zum Pressen von optischen Glasteilen verwendet.

Aus Patent Abstracts of Japan Volume 017, Nr. 259 (C-1061), 21. Mai 1993 (1993-05-21) und JP 05 004 824 A ist ein Verfahren zum Pressen einer Linse bekannt, die Infrarotlicht und sichtbares Licht überträgt. Hierbei wird ein Chalkogenidglas mittels einer erhitzten Pressform, die optisch polierte Oberflächen aufweist, heiß gepresst. Die Formhälften bestehen aus einem Metall, das einen thermischen Ausdehnungskoeffizienten hat, der annähernd dem des Chalkogenidglases entspricht. So können hochpräzise Linsenpresslinge mit hoher Geschwindigkeit hergestellt werden, da Rissbildungen beim Pressverfahren vermieden werden.

Aus der DE-A-199 39 787 ist ferner eine transparente, mit Vanadiumoxid-Zusatz dunkel einfärbbare Glaskeramik mit Hochquarz-Mischkristallen als vorherrschende Kristallphase und ein Verfahren zur Herstellung bekannt. Hieraus hergestellte Glaskeramiken werden vorzugsweise in transparenter Form als Brandschutzglas, Kaminsichtscheiben, Kochgeschirr und in dunkel eingefärbter Form als beheizbare Platte zum Kochen und Grillen, sowie als Substratmaterial für Waverstages oder Spiegelträger für Teleskope eingesetzt.

Ein Formgebungsverfahren zur Herstellung eines Glas- oder Glaskeramikproduktes ist hieraus jedoch nicht bekannt.

Vor diesem Hintergrund liegt der Erfindung die Aufgabe zugrunde, ein Verfahren zur Herstellung eines glasigen in einer Glaskeramik mit Hochquarz- und/oder Keatit-Mischkristallen umwandelbaren Trägermaterial für die Beschichtung mit einer Spiegelschicht anzugeben, mit dem sich ein vorteilhafter Formgebungsprozess mit hoher Präzision durchführen lässt.

Diese Aufgabe wird durch ein Verfahren mit den Merkmalen des Anspruchs 1 gelöst. Vorteilhafte Weiterbildungen der Erfindung sind in den abhängigen Ansprüchen unter Schutz gestellt.

Bei dem erfindungsgemäßen Verfahren zur Herstellung eines glasigen, in eine Glaskeramik mit Hochquarz- und/oder Keatit-Mischkristallen umwandelbaren Trägermaterials für die Beschichtung mit einer Spiegelschicht erfolgt die Formgebung über einen Speiser, indem ein Tropfen definierten Gewichtes in eine Pressform gegeben wird. Über einen Stempel mit geglätteter Oberfläche wird die geforderte parabolische Kontur des Trägermaterials gepresst. Die glasigen Trägermaterialien werden anschließend aus der Pressform entnommen und in einem Kühlofen thermisch entspannt. Anschließend findet eine Qualitätskontrolle zur Aussortierung von fehlerhaften Formkörpern statt.

Vorzugsweise verfügt das zum Pressen verwendete Glas über eine niedrige Verarbeitungstemperatur V_{A} kleiner 1300°C. Die Temperaturbelastungen im Bereich des Speisers, des Auslaufs und für die Presswerkzeuge sind dadurch verringert, wodurch sich die Standzeiten erhöhen. Auch das Einschmelzen des Glases in der Schmelzwanne und die Blasenqualität des erhaltenen Glases werden durch die niedrige Viskosität günstig beeinflusst.

Vorzugsweise wird hierzu ein glasiges Trägermaterial verwendet, bei dem die Umwandlung des gepressten glasigen Trägermaterials in Hochquarz-Mischkristall als Hauptkristallfaser enthaltene Glaskeramik bei Keimbildungstemperaturen von 630 bis 750°C, einer Dauer von größer 15 min und die Kristallisation bei Temperaturen von 700°C bis 850°C bei einer Dauer größer 30 min erfolgt.

In alternativer Ausführung der Erfindung kann das gepresste glasige Trägermaterial bei Temperaturen von 780°C bis 1000°C in eine Glaskeramik mit Keatit-Mischkristall als Hauptkristallphase umgewandelt werden.

In weiterer vorteilhafter Ausgestaltung des erfindungsgemäßen Verfahrens wird eine Glaskeramik mit Hochquarz- und/oder Keatit-Mischkristallen verwendet mit einer Oberflächenrauhigkeit ohne Polieren von Ra < 50 nm, einer thermischen Ausdehnung im Temperaturbereich zwischen 20°C und 300°C von < 1,2 · 10⁻⁶/K, einer Transmission im nahen Infrarot bei 1050 nm von > 85 % bei 4 mm Dicke und einer Zusammensetzung in Gewichtsprozent, bezogen auf die Gesamtzusammensetzung, enthaltend:

| | |
|---|---|
| Li₂O | 3,0-5,5 |
| Na₂O | 0-2,5 |
| K₂O | 0-2,0 |
| Σ Na₂O+K₂O | 0,5-3,0 |
| Σ MgO+ZnO | < 0,3 |
| SrO | 0-2,0 |
| BaO | 0-3,5 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,0-6,0 |
| P₂O₅ | 0-8,0 |
| Fe₂O₃ | < 200 ppm |
| F | 0-0,6 |

sowie gegebenenfalls mindestens ein Läutermittel, wie As₂O₃, Sb₂O₃, SnO₂, CeO₂, Sulfat- und Chlorid-Verbindungen.

Bevorzugte Weiterbildungen dieser Ausführung sind in den Ansprüchen 5 bis 7 näher bezeichnet.

Hierbei beträgt die mittlere Kristallitgröße der Glaskeramik bevorzugt weniger als 300 nm, bevorzugt weniger als 80 nm.

Die verwendeten Glaszusammensetzungen eignen sich, um die beim Pressen erhaltene niedrige Oberflächenrauhigkeit des glasigen Formkörpers auch bei einer Kristallisation zu erhalten. Insbesondere bei Ausbildungen großer und mittlerer Kristallitgrößen kann sich die Oberflächenrauhigkeit der Glaskeramik erhöhen. Nach Aufbringen der Spiegelschicht bleibt die Oberflächenrauhigkeit weitgehend erhalten und bewirkt eine teilweise Streuung des Lichtes. Durch diese Lichtstreuung wird die Lichtausbeute verschlechtert. Als Zielgröße für die Oberflächenrauhigkeit wird ein Ra-Wert der Glaskeramik von < 50 nm, bevorzugt < 20 nm, gefordert. Mit diesem Wert werden Lichtausbeuten erreicht, die ein kostspieliges Polieren des Trägermaterials vor der Beschichtung in der Regel überflüssig machen.

Für Anwendungen, bei denen höchste Anforderungen an die thermische Belastbarkeit des Spiegelträgermaterials gestellt werden, beträgt die thermische Ausdehnung der Glaskeramik im Temperaturbereich zwischen Raumtemperatur und 300°C weniger als 1,2 · 10⁻⁶/K. Dies bewirkt eine große Temperaturgradientenfestigkeit, da die Temperaturunterschiede in dem Spiegelträgermaterial keine kritischen, thermisch bedingten Spannungen aufbauen können. Vor allem die nicht völlig zu vermeidenden Defekte in der Glaskeramik oder Mikrorisse zwischen Spiegelschicht und Trägermaterial können so aufgrund der durch Temperaturunterschiede bedingten Spannungen beim Ein- und Ausschalten oder im Gebrauch nicht zum Wachstum angeregt werden.

Durch die erfindungsgemäß verwendete Zusammensetzung der Glaskeramik mit den Alkalioxiden Na₂O, K₂O wird erreicht, dass sich eine mit diesen Komponenten angereicherte glasige Oberflächenschicht beim Keramisieren ausbildet, die bis zu 1,5 µ Dicke besitzt. Auch Zusätze der Erdalkalioxide SrO, BaO sowie B₂O₃ unterstützen die Ausbildung der glasigen Oberflächenschicht. Höhere Dicken sind wegen der Gefahr von Oberflächenrissen, hervorgerufen durch Unterschiede in der thermischen Ausdehnung, zu vermeiden. Durch die glasige Oberflächenschicht wird erreicht, dass die Zunahme der Oberflächenrauhigkeit in der Glaskeramik gegenüber dem Ausgangsglas weniger als 10 nm und in der Regel weniger als 5 nm beträgt. Die Oberflächenrauhigkeit des Trägermaterials wird dann maßgeblich durch die beim Pressen verfahrenstechnisch bedingte Oberflächenrauhigkeit bestimmt.

In einigen Anwendungsfällen ist es gewünscht, die Glaskeramik im sichtbaren Bereich einzufärben. Die Vorteile einer hohen Transmission im nahen Infrarot von 900 bis 1800 nm für die Verwendung als Kaltlichtreflektor sollen beibehalten werden. Auch soll die gute Lichttransmission für eine sichere Qualitätsbeurteilung des gepressten glasigen Formkörpers beibehalten werden. Für die Kombination einer guten Lichttransmission im glasigen Zustand, einer Einfärbung der Glaskeramik im sichtbaren Bereich und hoher Transmission der Glaskeramik im neuen Infrarot, hat sich insbesondere das Farboxid V₂O₅ bei Gehalten von 0,1 bis 0,5 Gew.-% bewährt. Der Zusatz von V₂O₅ führt im Glas zu einer leicht grünen Einfärbung, beim Keramisieren findet eine starke Einfärbung statt, während im nahen IR nur wenig absorbiert wird.

Die maximale Temperaturbelastbarkeit der Glaskeramik wird durch die Compaction bestimmt. Compaction bedeutet, dass die thermisch hoch belasteten Bereiche des glaskeramischen Trägermaterials stärker als thermisch weniger belastete Bereiche kontrahieren. Dieser Effekt tritt durch Gefügeänderungen in Abhängigkeit von der Temperatur/Zeitbelastung der Glaskeramik auf. Die unterschiedliche Temperatur/Zeitbelastung und damit einhergehende Compaction macht sich insbesondere bei größeren Artikeln bemerkbar. Eine hohe Compaction führt zu unzulässig hohen Compactionsspannungen zwischen den thermisch hoch und weniger belasteten Bereichen des Artikels. Im Extremfall kann dies bei längerem Einsatz bei hohen Temperaturen zum Bruch führen. Die Compaction bezogen auf 100 mm Probenlänge soll nach Temperung bei 600°C, 200 h vorzugsweise weniger als 60 µm betragen, womit selbst Anwendungen mit höchster thermischer Belastung Genüge getan wird.

Für die Verwendung als Kaltlichtreflektor ist es vorteilhaft, wenn die IR-Transmission außer für die Wellenlänge von 1050 nm über den gesamten Bereich von 900 bis 1800 nm Werte von größer 85 %, bevorzugt größer 87 % bei 4 mm Dicke besitzt. Mit diesem breiten Wellenlängenbereich wird den Strahlungsmaxima der meisten lichtstarken Lampentypen und ihrer spektralen Verteilung entsprochen. Das macht das nach dem erfindungsgemäßen Verfahren hergestellte glaskeramische Trägermaterial vielseitig einsetzbar.

Vorzugsweise findet die erfindungsgemäße Glaskeramik und/oder das Ausgangsglas als Reflektor Verwendung, insbesondere Kaltlichtreflektor, Trägermaterial für eine Spiegelschicht, Vorsatzscheibe in der Lichttechnik, insbesondere dort, wo durch hohe Lichtleistung eine hohe Strahlungswärme verbunden mit Temperaturunterschieden toleriert werden muss. Während das glasige Trägermaterial wirtschaftlich günstige Lösungen mit verringerten Anforderungen an Temperaturbelastbarkeit und Temperaturgradientenfestigkeit erfüllt, genügen die Glaskeramiken höchsten Anforderungen bezüglich dieser Eigenschaften. Diese Trägermaterialien verfügen über eine sehr hohe Infrarottransmission und erlauben damit die Verwendung als Kaltlichtreflektoren.

Die vorliegende Erfindung wird anhand von Beispielen und einer Zeichnung weiter verdeutlicht.

Die Ausgangsgläser wurden unter Verwendung von in der Glasindustrie üblichen Rohstoffen bei Temperaturen von 1620 °C erschmolzen und geläutert. Nach dem Schmelzen in Tiegeln aus gesintertem Kieselglas wurden die Schmelzen in Platintiegel umgegossen und bei Temperaturen von 1580 °C über 30 min durch Rühren homogenisiert. Nach Abstehen von 2 h bei 1640 °C, wurden Gussstücke von 140x100x30 mm Größe gegossen und in einem Kühlofen beginnend ab 650 °C auf Raumtemperatur abgekühlt, um thermische bedingte Spannungen abzubauen. Aus diesen Gussstücken wurden die Prüfmuster, wie Stäbe für die Messung des thermischen Ausdehnungskoeffizienten und Plättchen für die Messung der Transmission, herauspräpariert. Die glasigen Muster, in den für Untersuchungen an Glaskeramiken benötigten Größen, wurden anschließend mit den aufgeführten Keimbildungs- und Kristallisationsbedingungen in die Glaskeramik umgewandelt.

Tabelle 1 zeigt Zusammensetzungen von erfindungsgemäßen Gläsern. Beispiele 7, 8 und 9 sind Vergleichsbeispiele und zeigen die Vorteile der Erfindung gegenüber dem Stand der Technik.

Die durch eingesetzte Rohstoffe bedingten Eisengehalte sind in ppm angegeben. Der H₂O-Gehalt wurde über Infrarotmessungen bestimmt und ist in Mol/l angegeben.

An den erschmolzenen Gläsern wurden die Transformationstemperatur Tg, die Verarbeitungstemperatur V_{A}, die thermische Ausdehnung im Temperaturbereich zwischen 20 °C und 300 °C, die Dichte, der Lichttransmissionsgrad τ im Bereich des sichtbaren Lichtes nach EN 410 und die Infrarottransmission bei 4 mm Dicke bei den Wellenlängen 1050 und 1800 nm bestimmt.

Für die Messung des Entglasungsverhaltens wurden die Gläser im Platintiegel aufgeschmolzen. Anschließend wurden die Platintiegel für 5 h bei verschiedenen Temperaturen im Bereich der Verarbeitungstemperatur gehalten. Die höchste Temperatur, bei der die ersten Kristalle im Kontakt der Glasschmelze mit dem Platintiegel auftraten, bestimmt die obere Entglasungstemperatur (OEG = obere Entglasungsgrenze). Die bei der Entglasung auftretende kritische Kristallphase ist in der Tabelle aufgeführt.

DTA-Messungen liefern die Kristallisationstemperatur des Glases für den Übergang in die Hochquarz-Mischkristall enthaltende Glaskeramik und für die Umwandlungstemperatur in die Keatit-Mischkristall enthaltende Glaskeramik. Dabei wurde eine einheitliche konstante Heizrate von 5 K/min verwendet. In der Tabelle sind die Temperaturen für die Kristallisation der Hochquarz-Mischkristall-Glaskeramik und die Umwandlung in die Keatit-Mischkristall enthaltende Glaskeramik aufgeführt.

Wie aus Tabelle 1 ersichtlich, wurden mit den erfindungsgemäßen Gläsern Nr. 1 bis 6 die Anforderungen an das Glas, für die Formgebung durch Pressen und die Verwendung als Trägermaterial für die Beschichtung mit einer Spiegelschicht in glasiger Form, erfüllt.

Die Verarbeitungstemperatur V_{A} lag unterhalb 1300 °C und zum Teil sogar unterhalb 1270 °C. Die obere Entglasungstemperatur OEG lag höchstens 50 °C oberhalb der Verarbeitungstemperatur V_{A} der Gläser, zum Teil sogar darunter.

Die thermische Ausdehnung des Glases im Temperaturbereich zwischen Raumtemperatur und 300 °C betrug weniger als 5 · 10⁻⁶/K. Die Transformationstemperatur Tg lag oberhalb 600 °C. Die insbesonders für die Qualitätsbegutachtung wichtige Lichttransmission der Gläser lag oberhalb 85% für 4 mm Dicke.

Für die Verwendung als Spiegelträgermaterial in glasiger Form besitzen die Gläser eine hohe IR-Transmission bei 1050 nm und 4 mm Dicke von > 85%. Diese guten Transmissionswerte wurden auch im Wellenlängenbereich von 900 bis 1800 nm erreicht.

Die DTA-Peaktemperaturen für die Kristallisation des Hochquarz-Mischkristalls und die Umwandlung in den Keatit-Mischkristall lagen mindestens 40 °C auseinander.

Die Vergleichsbeispiele 8 und 9 besitzen aufgrund ihrer Zusammensetzungen eine sehr niedrige Viskosität. Die Transformationstemperaturen Tg sind niedrig.

Bei Vergfeichsbeispiel 8 entspricht die Entglasungsstabilität nicht den Anforderungen.

**Tabelle 1: Zusammensetzungen und Eigenschaften von Gläsern**

| **Beispiele Nr.** | **1** | **2** | **3** | **4** | **5** | **6** | **7** | **8** | **9** |
|---|---|---|---|---|---|---|---|---|---|
| **Glas-Nr.** | **1** | **2** | **3** | **4** | **5** | **6** | **7** | **8** | **9** |
| Li₂O (Gew.-%) | 4,60 | 4,56 | 4,55 | 4,30 | 4,75 | 4,00 | 3,70 | 5,00 | 3,93 |
| Na₂O (Gew.-%) | 0,60 | 0,60 | 0,60 | 0,90 | 0,60 | 0,20 | 0,50 | | 0,80 |
| K₂O (Gew.%) | 0,40 | 0,40 | 0,40 | | 0,38 | 0,80 | | 0,70 | 0,55 |
| MgO (Gew.-%) | 0,25 | 0,25 | | | 0,10 | 0,10 | 0,45 | 1,80 | 1,80 |
| CaO(Gew.-%) SrO | | | | | | | | 0,10 | |
| (Gew.-%) | 0,75 | | | 1,00 | | 0,30 | | | |
| BaO (Gew.-%) ZnO | | 1,11 | 1,10 | | 1,16 | 1,50 | 2,00 | | |
| (Gew.-%) | | | | 0,20 | | 0,10 | 1,70 | 0,95 | 0,97 |
| B₂O₃ (Gew.-%) | 2,00 | 2,0 | 2,00 | 1,00 | 2,10 | | | 2,80 | 2,70 |
| Al₂O₃ (Gew.-%) | 23,00 | 22,90 | 22,95 | 23,20 | 19,70 | 24,5 | 21,80 | 23,00 | 22,50 |
| SiO₂ (Gew.-%) | 60,50 | 60,28 | 60,35 | 59,80 | 62,85 | 58,0 | 64,30 | 57,95 | 59,20 |
| TiO₂ (Gew.-%) | 2,50 | 2,50 | 2,55 | 3,20 | 2,66 | 3,80 | 2,40 | 2,50 | 3,40 |
| ZrO₂ (Gew.-%) | 1,60 | 1,60 | 1,55 | 1,10 | 1,63 | 1,00 | 1,70 | 1,65 | 0,98 |
| P₂O₅ (Gew.-%) | 2,20 | 2,20 | 2,35 | 4,00 | 2,40 | 4,00 | | 1,75 | 1,89 |
| As₂O₃ (Gew.-%) | | | | 1,30 | | | | 0,80 | 0,28 |
| Sb₂O₃ (Gew.-%) | 1,60 | 1,60 | 1,60 | | 1,67 | 1,50 | 1,45 | | |
| F (Gew.-%) | | | | | | 0,20 | | 1,00 | 1,00 |
| Fe₂O₃ (ppm) | 58 | 87 | 84 | 64 | 73 | 140 | 470 | 81 | 110 |
| H₂O (mol/l) | 0,035 | 0,040 | 0,039 | 0,030 | 0,036 | 0,031 | 0,028 | 0,026 | 0,039 |

| **Eigenschaften** | | | | | | | | | |
|---|---|---|---|---|---|---|---|---|---|
| **Glas:** | | | | | | | | | |
| Tg (°C) | 643 | 644 | 650 | 655 | 625 | 661 | 680 | 580 | 601 |
| V_{A} (°C) | 1245 | 1245 | 1257 | 1278 | 1269 | 1273 | 1288 | 1163 | 1203 |
| α 20/300 (10⁻⁶/K) | 4,8 | 4,7 | 4,7 | 4,5 | 4,9 | 4,3 | 4,1 | 4,9 | 4,5 |
| Dichte (g/cm³) | 2,435 | 2,443 | 2,436 | 2,420 | 2,421 | 2,460 | 2,496 | 2,443 | 2,434 |
| Lichttransmission 4 mm Dicke, τ (%) | 91,3 | 91,4 | 91,1 | 91,1 | 90,9 | 90,6 | 89,4 | 90,9 | 89,7 |
| IR-Transmission | | | | | | | | | |
| 1050 nm (%) | 91,6 | 91,6 | 91,4 | 91,2 | 91,5 | 90,5 | 87,1 | 91,7 | 91,5 |
| 1800 nm (%) | 91,6 | 91,5 | 91,3 | 91,3 | 91,4 | 90,7 | 88,4 | 91,9 | 91,5 |

| **Entglasungsverhalten:** | | | | | | | | | |
|---|---|---|---|---|---|---|---|---|---|
| OEG (°C) . | 1250 | 1255 | 1230 | 1215 | 1260 | 1315 | 1325 | 1230 | 1130 |
| Kristallphase | Baddeleyit | Baddeleyit | Baddeleyit | Mullit | Baddeleyit | Mullit | Mullit | Baddeleyit | Keatit |

| **Kristallisationsverhatten:** | | | | | | | | | |
|---|---|---|---|---|---|---|---|---|---|
| DTA-Peaktemperaturen: | | | | | | | | | |
| Hochquarz-MK(°C) | 812 | 815 | 825 | 850 | 824 | 837 | 829 | 751 | 765 |
| Keatit-MK (°C) | 912 | 917 | 926 | 981 | 865 | 1013 | 1013 | 797 | 847 |

In Tabelle 2 sind die Ausgangsgläser für die Keramisierung gemäß der Glas-Nr. von Tabelle 1 aufgeführt. Bei den Beispielen 17 und 18 handelt es sich um Vergleichsglaskeramiken.

Die Keramisierung, dass heißt die Überführung der Gläser in die Glaskeramiken erfolgte bei den in Tabelle 2 aufgeführten Keimbildungs- und Kristallisationsbedingungen. Die Gläser wurden mit 5 K/min von Raumtemperatur auf 500 °C aufgeheizt. Das Aufheizen auf die angegebenen Keimbildungstemperaturen erfolgte mit 4 K/min. Keimbildungstemperaturen und die Dauer der Keimbildung sind in Tabelle 2 angegeben. Die Erhöhung von der Keimbildungstemperatur auf die Kristallisationstemperatur wurde mit einer Heizrate von 1,5 K/min durchgeführt. Bei der angegebenen Kristallisationstemperatur und der aufgeführten Dauer wurden die Gläser kristallisiert. Die Abkühlung erfolgte bis 500 °C mit einer Abkühlrate von ca. 4K/min, anschließend durch Abschalten der Ofenheizung.

Beispiele 12 und 15 zeigen Glaskeramiken, die in weiß/transluzente Glaskeramiken mit Keatit-Mischkristallen als Hauptkristallphase umgewandelt wurden. Die restlichen erfindungsgemäßen Beispiele verfügen über Hochquarz-Mischkristalle als vorherrschende Kristallphase.

Die Kristallphasenanteile und die mittleren Kristallitgröße der Hauptkristallphase wurden mittels Röntgenbeugungsdiffraktometrie bestimmt.

Die erfindungsgemäßen Beispiele verfügen über die gewünschten niedrigen Werte für die thermische Ausdehnung gemessen im Temperaturbereich zwischen 20 °C und 300 °C.

**Tabelle 2: Keramisierungsbedingungen und Eigenschaften erfindungsgemäßer Glaskeramiken und Vergleichsglaskeramiken (Beispiele 17, 18)**

| **Beispiele Nr.** | **10** | **11** | **12** | **13** | **14** | **15** | **16** | **17** | **18** |
|---|---|---|---|---|---|---|---|---|---|
| **Glas Nr.** | **1** | **2** | **2** | **3** | **4** | **5** | **6** | **7** | **9** |
| Keramisierungs-bedingungen: | | | | | | | | | |
| Keimbildung | 700 °C, 1h | 700 °C, 1h | 700 °C, 1h | 700 °C, 1h | 685 °C, 3h | 680 °C, 1 h | 630 °C, 1h | 740 °C, 1h | 665 °C, 1h |
| Kristallisation Umwandlung | 780 °C, 1h | 780 °C, 1h | - | 785 °C, 1h | 820 °C, 1h | - | 830 °C, 1h | 850 °C, 1h | 725 °C, 1h |
| | - | - | 825 °C, 1h | - | - | 780 °C, 1h | - | - | - |
| Haupt-Kristallphase | hQMK | hQMK | Keatit MK | hQMK | hQMK | Keatit-MK | hQMK | hQMK | hQMK |
| Phasenanteil Hochquarz-MK(%) | 75 | 71 | - | 72 | 74 | 25 | 70 | 72 | 68 |
| Keatit-MK (%) | - | - | 93 | - | - | 75 | - | - | 1 |
| mitll. Kristallitgr. (nm) | 42 | 43 | 120 | 39 | 36 | 100 | 38 | 37 | 55 |
| Eigenschaften, keramisiert: Transparenz | transparent | transparent | weißtransluzent | transparent | transparent | weißtransluzent | transparent | transparent | weißtransluzent |
| Thermische Ausdehnung 20-300 °C (10⁻⁶/K) | -0,4 | -0,4 | +1,0 | -0,6 | -0,1 | +0,6 | -0,2 | -0,4 | +0,5 |
| IR-Transmission | | | | | | | | | |
| 4 mm Dicke | | | | | | | | | |
| 1050 nm (%) | 90,2 | 91,0 | 87,5 | 89,8 | 90,7 | 85,3 | 88,6 | 84,8 | 91,1 |
| 1800 nm (%) | 90,8 | 91,3 | 90,3 | 90,1 | 90,4 | 90,4 | 88,7 | 83,2 | 91,6 |
| Oberflächenrauhigkeit Ra (nm) | | | | | | | | | Ober-flä chenabplat zungen |
| Ausgangsglas: | 0,45 | 0,30 | 0,30 | 0,37 | 0,25 | 0,60 | 0,19 | 0,41 | |
| Glaskeramik: | 0,43 | 0,40 | 0,61 | 0,42 | 0,27 | 0,40 | 0,49 | 0,46 | |
| Lichttransmission 4 mm Dicke, τ (%) | 87,9 | 87 | 53 | 86,5 | 88,6 | 54,2 | 83,7 | 68,0 | 82,6 |
| Compaction nach 600 °C, 200 h (µm/100mm) | 51 | 53 | 16 | 49 | 18 | n.g. | 13 | 6 | 164 |

| | | | | | | | | | |
|---|---|---|---|---|---|---|---|---|---|
| Bezeichnungen: hQMK: Hochquarz-Mischkristalle n.g. nicht gemessen | | | | | | | | | |

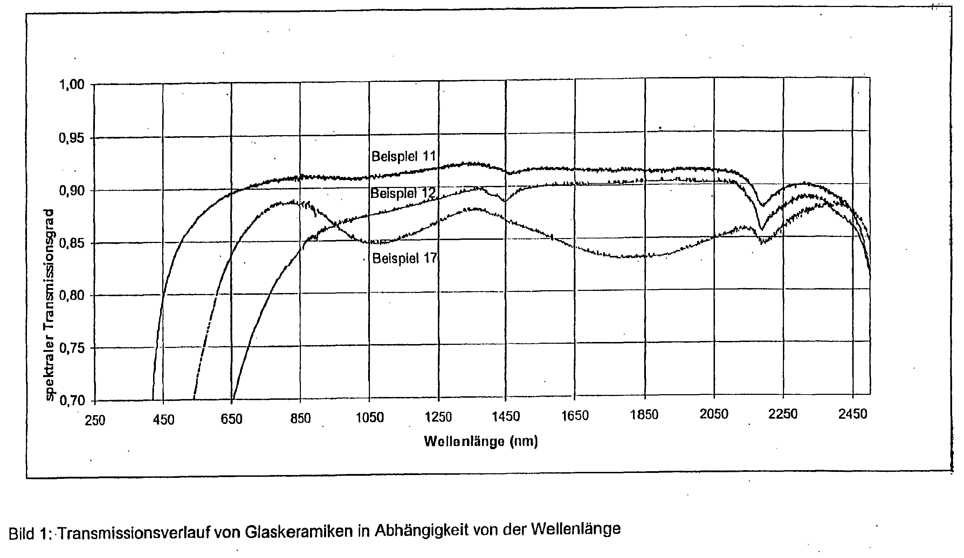

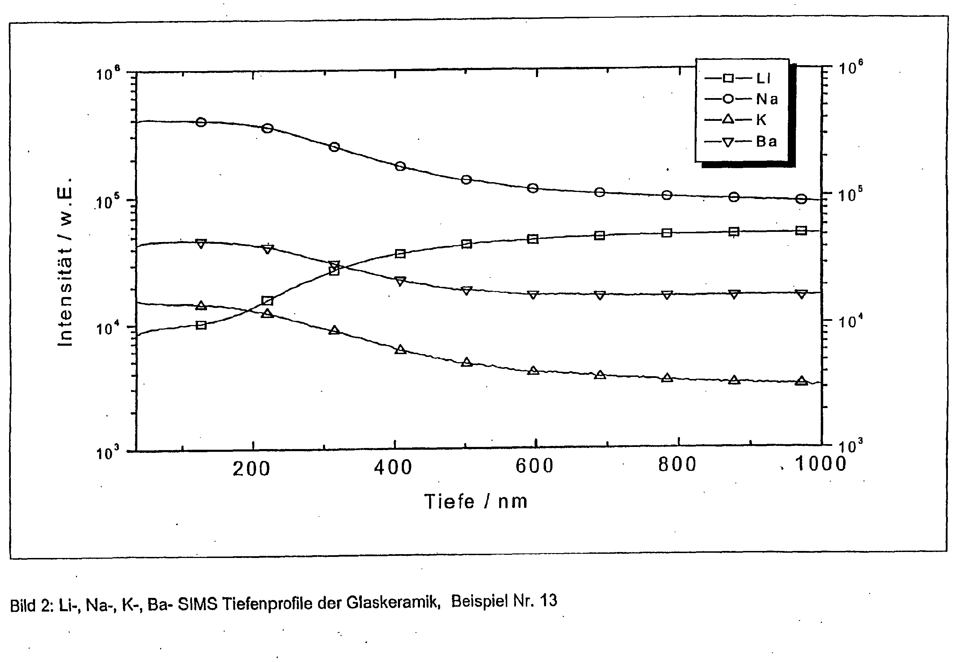

Die Zeichnung besteht aus Figur 1 und Figur 2. Figur 1 zeigt den Tranmissionsverlauf von Glaskeramiken in Abhängigkeit von der Wellenlänge.

Die Figur 1 zeigt den Transmissionsverlauf für das Glas-Nr. 2, und die daraus hergestellten Glaskeramiken mit Hochquarz- bzw. Keatit-Mischkristallen als Hauptkristallphase (Beispiel 11 und 12). Zwischen 900 und 1800 nm werden hohe Transmissionswerte erreicht. Demgegenüber zeigt die Vergleichsglaskeramik Beispiel Nr. 17, im keramisierten Zustand breite Absorptionsbanden bei ca. 1050 nm und 1800 nm, die auf die hohen Eisengehalte zurückgeführt werden. Mit den erfindungsgemäßen Beispielen wird die geforderte hohe IR-Transmission erreicht. Die Lichttransmission der erfindungsgemäßen Glaskeramiken verfügt über die für die Qualitätsinspektion wichtigen hohen Werte.

Figur 2 zeigt Li-, Na-, K- und Ba-SIMS Tiefenprofile der erfindungsgemäßen Glaskeramik.

Für die Messung der Oberflächenrauhigkeit der Glaskeramik werden aus einem Gussstück mit feuerpolierter Oberfläche, wie sie beim Gießens des Glases entstanden ist, mehrere etwa gleich große Proben von 2x2 cm² Oberfläche und ca. 0,5 cm Dicke herauspräpariert. Eine der Proben verbleibt zu Vergleichszwecken glasig, andere werden mit den angegebenen Keramisierungsbedingungen in die Glaskeramik überführt. Bei den Proben wird die Oberflächenrauhigkeit Ra mit einem Rasterkraftmikroskop (AFM) in einem quadratischen Messbereich von 50µm Seitenlänge gemessen. Es wird eine feuerpolierte Oberfläche in der beschriebenen Weise für die Messung verwendet, weil dabei die Oberfläche nicht durch das Pressen verfahrensbedingt beeinflusst wird. Die niedrigen Rauhigkeitswerte werden auf das Vorhandensein einer glasigen Oberflächenschicht in den Glaskeramiken zurückgeführt. Bei der Vergleichsglaskeramik Beispiel 18 konnte die Oberflächenrauhigkeit nicht gemessen werden, weil es zu Abplatzungen der Oberflächenschicht kam.

Figur 2 zeigt das, an einem Querschliff von Beispiel 13, gemessene Tiefenprofil der Elementkonzentration von Li, Na, K und Ba. Aus dem Konzentrationsverlauf der Alkali- und Erdalkalielemente ist ersichtlich, dass sich bei diesem Beispiel die für das Erreichen guter Oberflächenrauhigkeitswerte günstige glasige Oberflächenschicht von etwa 400 nm Dicke gebildet hat. Das Li-Tiefenprofil korreliert mit der Anwesenheit der Kristalle, in die es bevorzugt eingebaut wird.

Die Compaction wird als Längenänderung eines 100 mm langen Stabes bei Temperung mit 600 °C, 200 h gemessen. Mit dieser gegenüber üblichen Einsatzbedingungen erhöhten Temperatur wird in einem Zeitraffertest die Temperatur/Zeit-Belastbarkeit der Glaskeramik nachempfunden. Es werden die geforderten niedrigen Compactionwerte erreicht, während die Vergleichsglaskeramik Beispiel 18 hohe Werte besitzt.

## Patentansprüche

1. Verfahren zur Herstellung eines glasigen in eine Glaskeramik mit Hochquarz- und/oder Keatit-Mischkristallen umwandelbaren Trägermaterials für die Beschichtung mit einer Spiegelschicht, wobei die Formgebung über einen Speiser erfolgt, in dem ein schmelzflüssiger Tropfen, definierten Gewichtes, in eine Pressform gegeben wird, und über einen Stempel mit geglätteter Oberfläche die parabolische Kontur des Trägermaterials gepresst wird.

2. Verfahren nach Anspruch 1, wobei die Umwandlung des gepressten glasigen Trägermaterials in die Hochquarzmischkristall als Hauptkristallphase enthaltende Glaskeramik bei Keimbildungstemperaturen von 630°C bis 750°C, einer Dauer von > 15 min und die Kristallisation bei Temperaturen von 700°C bis 850°C, einer Dauer > 30 min erfolgt.

3. Verfahren nach Anspruch 1, wobei das gepresste glasige Trägermaterial bei Temperaturen von 780°C bis 1000°C in eine Glaskeramik mit Keatit-Mischkristall als Hauptkristallphase umgewandelt wird.

4. Verfahren nach einem der Ansprüche 1 bis 3, bei dem eine Glaskeramik mit Hochquarz- und/oder Keatit-Mischkristallen verwendet wird mit einer Oberflächenrauhigkeit ohne Polieren von Ra < 50 nm, einer thermischen Ausdehnung im Temperaturbereich zwischen 20°C und 300°C von <1,2 · 10⁻⁶/K, einer Transmission im nahen Infrarot bei 1050 nm von > 85% bei 4 mm Dicke, und einer Zusammensetzung in Gew.-%, bezogen auf die Gesamtzusammensetzung, enthaltend:
| | |
|---|---|
| Li₂O | 3,0-5,5 |
| Na₂O | 0-2,5 |
| K₂O | 0-2,0 |
| Σ Na₂O+K₂O | 0,5-3,0 |
| Σ MgO+ZnO | < 0,3 |
| SrO | 0-2,0 |
| BaO | 0-3,5 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,0-6,0 |
| P₂O₅ | 0-8,0 |
| Fe₂O₃ | < 200 ppm |
| F | 0-0,6 |
sowie gegebenenfalls mindestens ein Läutermittel, wie As₂O_{3,} Sb₂O₃, SnO₂, CeO₂, Sulfat- und Chlorid-Verbindungen.

5. Verfahren nach Anspruch 4, bei dem eine Glaskeramik verwendet wird mit Hochquarz-Mischkristallen als Haupt-kristallphase, einer thermischen Ausdehnung im Temperaturbereich zwischen 20°C und 300°C von < 0,5 10⁻⁶/ K, einer Transmission im nahen Infrarot bei 1050 nm von > 87%, bevorzugt > 89% bei 4 mm Dicke und einer Zusammensetzung in Gew.-%, bezogen auf die Gesamtzusammensetzung, enthaltend:
| | |
|---|---|
| Li₂O | 3,0-5,0 |
| Na₂O | 0-2,0 |
| K₂O | 0-1,5 |
| E Na₂O+K₂O | 0,5-2,5 |
| Σ SrO+BaO | < 4,0 |
| Σ TiO₂+ZrO₂ | 3,5-5,5 |
| Σ B₂O₃+P₂O₅ | 1,0-8,0 |
| Fe₂O₃ | < 130 ppm |
| F | 0-0,3 |
und gegebenenfalls mindestens ein Läutermittel, wie As₂O₃, Sb₂O₃, SnO₂, CeO₂, Sulfat- und Chlorid-Verbindungen.

6. Verfahren nach Anspruch 4, bei dem eine Glaskeramik verwendet wird mit einer Zusammensetzung in Gew.-%, bezogen auf die Gesamtzusammensetzung, enthaltend:
| | |
|---|---|
| Li₂O | 3,0-5,0 |
| Na₂O | 0-2,0 |
| K₂O | 0-1,5 |
| Σ Na₂O+K₂O | 0,5-2,0 |
| Σ SrO+BaO | < 3,0 |
| B₂O₃ | 0-3,0 |
| Al₂O₃ | 21,0-27,0 |
| TiO₂ | 1,5-5,5 |
| Σ TiO₂+ZrO₂ | 3,5-5,5 |
| Σ B₂O₃+P₂O₅ | 1,0-8,0 |
und gegebenenfalls mindestens ein Läutermittel, wie As₂O₃, Sb₂O₃, SnO₂, CeO₂, Sulfat- und Chlorid-Verbindungen.

7. Verfahren nach Anspruch 4, bei dem eine Glaskeramik verwendet wird mit einer Zusammensetzung in Gew.-%, bezogen auf die Gesamtzusammensetzung, enthaltend:
| | |
|---|---|
| Li₂O | 3,5-5,0 |
| Na₂O | 0-2,0 |
| K₂O | 0-1,5 |
| Σ Na₂O+K₂O | 0,5-2,5 |
| Σ SrO+BaO | 1,0-4,0 |
| Al₂O₃ | 20-25 |
| SiO₂ | 55-63 |
| TiO₂ | 1,5-5,5 |
| ZrO₂ | 0-2,0 |
| Σ TiO₂+ZrO₂ | 3,5-5,0 |
| P₂O₅ | 1,0-8,0 |
| Σ B₂O₃+P₂O₅ | 2,0-8,0 |
und gegebenenfalls mindestens ein Läutermittel, wie As₂O₃, Sb₂O₃, SnO₂, CeO₂, Sulfat- und Chlorid-Verbindungen.

8. Verfahren nach einem der Ansprüche 4 bis 7, bei dem eine Glaskeramik verwendet wird, bei der die mittlere Kristallitgröße < 300 nm, bevorzugt < 80 nm beträgt.

9. Verfahren nach einem der Ansprüche 4 bis 8, bei dem eine Glaskeramik verwendet wird, die an der Oberfläche eine bis zu 1,5 µm dicke glasige Schicht mit erhöhten Na₂O-, K₂O-und/oder SrO-, BaO-Gehalten aufweist, und die Zunahme der Oberflächenrauhigkeit beim Keramisieren der Glaskeramik gegenüber dem Ausgangsglas weniger als 10 nm, bevorzugt weniger als 5 nm beträgt.

10. Verfahren nach einem der Ansprüche 4 bis 9, bei dem eine Glaskeramik verwendet wird, die zusätzlich mindestens ein im Sichtbaren absorbierendes, im nahen Infrarot nicht oder wenig absorbierendes Farboxid, vorzugsweise V₂O₅, enthält.

11. Verfahren nach einem der Ansprüche 4 bis 10, bei dem eine Glaskeramik verwendet wird, die eine hohe Temperatur/Zeit-Belastbarkeit hinsichtlich Compaction von < 60 µm/100 mm nach Temperung bei 600°C, 200 h aufweist.

12. Verfahren nach einem der Ansprüche 4 bis 11, bei dem eine Glaskeramik verwendet wird, die eine hohe IR-Transmission von > 85%, bevorzugt > 87% bei 4 mm Dicke im Wellenlängenbereich zwischen 900 nm - 1800 nm aufweist.

13. Verfahren nach einem der Ansprüche 4 bis 12, bei dem eine Glaskeramik verwendet wird, die eine Lichttransmission der Glaskeramik von > 50%, bevorzugt > 85% bei 4 mm Dicke aufweist.

## Claims

1. Process of making a glassy substrate material that is convertible into a glass ceramic with high quartz and/or keatite mixed crystals, for the coating with a mirror layer, wherein forming is performed via a feeder by introducing a fluid molten drop of a defined weight into a pressing mold, and is pressed by a piston with a smoothened surface into the parabolic contour of the substrate material.

2. The process according to claim 1, wherein the conversion of the pressed glassy substrate material into the glass ceramic containing the high quartz mixed crystals as a main crystal phase is performed at nucleation temperatures of 630°C to 750°C for a time of > 15 minutes, and wherein crystallization is performed at temperatures of 700°C to 850°C for a time of > 30 minutes.

3. The process according to claim 1, wherein the pressed glassy substrate material is converted into a glass ceramic with keatite mixed crystals as a main crystal phase at temperatures of 780°C to 1000°C.

4. The process according to any of claims 1 to 3, wherein a glass ceramic with high quartz and/or keatite mixed crystals is used, having a surface roughness without polishing of Ra < 50 nm, a coefficient of thermal expansion in the temperature region of 20°C to 300°C of < 1.2 - 10⁻⁶/K, a transmission in the near infrared at 1050 nm of > 85 % at a thickness of 4 mm, and having a composition in wit.-%, based on the total composition, comprising:
| | |
|---|---|
| Li₂O | 3.0-5.5 |
| Na₂O | 0-2.5 |
| K₂O | 0-2.0 |
| Σ Na₂O+K₂O | 0.5-3.0 |
| Σ MgO+ZnO | < 0.3 |
| SrO | 0-2.0 |
| BaO | 0-3.5 |
| B₂O₃ | 0-4.0 |
| Al₂O₃ | 19.0-27.0 |
| SiO₂ | 55.0-66.0 |
| TiO₂ | 1.0-5.5 |
| ZrO₂ | 0-2.5 |
| Σ TiO₂+ZrO₂ | 3.0-6.0 |
| P₂O₃ | 0-8.0 |
| Fe₂O₃ | < 200 ppm |
| F | 0-0.6, |
as well as possibly at least one refining agent, such as As₂O₃, Sb₂O₃, SnO₂, CeO₂, sulphate and chloride compounds.

5. The process according to claim 4, wherein a glass ceramic is used having high quartz mixed crystals as a main crystal phase, a coefficient of thermal expansion in the temperature region of 20°C and 300°C of < 0.5 · 10⁻⁶/K, a transmission in the near infrared at 1050 nm of > 87 %, preferably > 89 % at 4 mm thickness, and having a composition in wt.-%, based on the total composition, comprising:
| | |
|---|---|
| Li₂O | 3.0-5.0 |
| Na₂O | 0-2.0 |
| K₂O | 0-1.5 |
| Σ Na₂O+K₂O | 0.5-2.5 |
| Σ SrO+BaO | <4.0 |
| Σ TiO₂+ZrO₂ | 3.5-5.5 |
| Σ B₂O₃+P₂O₅ | 1.0-8.0 |
| Fe₂O₃ | < 130 ppm |
| F | 0-0.3, |
and possibly at least one refining agent, such as As₂O₃, Sb₂O₃, SnO₂, CeO₂, sulphate and chloride compounds.

6. The process according to claim 4, wherein a glass ceramic is used having a composition in wt.% based on the total composition, comprising:
| | |
|---|---|
| Li₂O | 3.0-5.0 |
| Na₂O | 0-2.0 |
| K₂O | 0-1.5 |
| Σ Na₂O+K₂O | 0.5-2.0 |
| Σ SrO+BaO | < 3.0 |
| B₂O₃ | 0-3.0 |
| Al₂O₃ | 21.0-27.0 |
| TiO₂ | 1.5-5.5 |
| Σ TiO₂+ZrO₂ | 3.5-5.5 |
| Σ B₂O₃+P₂O₅ | 1.0-8.0, |
and possibly at least one refining agent, such as As₂O₃, Sb₂O₃, SnO₂, CeO₂, sulphate and chloride compounds.

7. The process according to claim 4, wherein a glass ceramic is used having a composition in wt.-%, based on the total composition, comprising:
| | |
|---|---|
| Li₂O | 3.5-5.0 |
| Na₂O | 0-2.0 |
| K₂O | 0-1.5 |
| Σ Na₂O+K₂O | 0.5-2.5 |
| Σ SrO+BaO | 1.0-4.0 |
| Al₂O₃ | 20-25 |
| SiO₂ | 55-63 |
| TiO₂ | 1.5-5.5 |
| ZrO₂ | 0-2.0 |
| Σ TiO₂+ZrO₂ | 3.5-5.0 |
| P₂O₅ | 1.0-8.0 |
| Σ B₂O₃+P₂O₅, | 2.0-8.0, |
and possibly at least one refining agent, such as As₂O₃, Sb₂O₃, SnO₂, CeO₂, sulphate and chloride compounds.

8. The process according to any of claims 4 to 7, wherein a glass ceramic is used, wherein the medium crystallite size is 300 nm, preferably 80 nm.

9. The process according to any of claims 4 to 8, wherein a glass ceramic is used, which comprises at the surface a glassy layer up to 1.5 µm thick, having increased contents of Na₂O, K₂O and/or SrO, BaO, and wherein the increasing of the surface roughness during ceramization of the glass ceramic is less than 10 nm, preferably less than 5 nm, when compared with the starting glass.

10. The process according to any of claims 4 to 9, wherein a glass ceramic is used, which in addition comprises at least one coloring oxide not absorbing or only little absorbing in the visible light region or in the near infrared region, preferably V₂O₅.

11. The process according to any of claims 4 to 10, wherein a glass ceramic is used, having a high temperature/time durability with respect to compaction of < 60 µm/100 mm after annealing at 600°C, 200 h.

12. The process according to any of claims 4 to 11, wherein a glass ceramic is used having a high IR transmission of > 85 %, preferably 87 % at a thickness of 4 mm in the wavelength region between 900 nm - 1800 nm.

13. The process according to any of claims 4 to 12, wherein a glass ceramic is used having a light transmission of > 50 %, preferably > 85 % at 4 mm thickness.

## Revendications

1. Procédé de fabrication d'un matériau vitreux de support qui peut être converti en vitrocéramique qui présente une haute teneur en cristaux mixtes de quartz et/ou de kéatite et qui est destiné à être revêtu d'une couche réfléchissante, le façonnage s'effectuant par l'intermédiaire d'un dispositif d'alimentation dans lequel une goutte de liquide fondu d'un poids défini est placée dans un moule de compression et est comprimée par un poussoir à surface lisse pour former le contour parabolique du matériau de support.

2. Procédé selon la revendication 1, dans lequel la conversion du matériau vitreux de support comprimé en la vitrocéramique qui contient une haute teneur en cristaux mixtes de quartz comme phase cristalline principale s'effectue à des températures de formation de germes de 630°C à 750°C pendant une durée > 15 min, la cristallisation ayant lieu à des températures de 700°C à 850°C pendant une durée > 30 min.

3. Procédé selon la revendication 1, dans lequel le matériau vitreux de support comprimé est converti en une vitrocéramique à cristaux mixtes de kéatite comme phase cristalline principale à des températures de 780°C à 1000°C.

4. Procédé selon l'une des revendications 1 à 3, qui utilise une vitrocéramique à haute teneur en cristaux mixtes de quartz et/ou de kéatite d'une rugosité de surface sans polissage Ra < 50 nm, dont la dilatation thermique dans la plage de température de 20°C à 300°C est < 1,2 . 10⁻⁶/K, dont la transmission dans l'infrarouge proche à 1 050 nm est > 85 % pour une épaisseur de 4 mm, et dont la composition contient en % en poids par rapport à la composition totale :
| | |
|---|---|
| Li₂O | 3,0 - 5,5 |
| Na₂O | 0-2,5 |
| K₂O | 0-2,0 |
| Σ Na₂O + K₂O | 0,5 - 3,0 |
| Σ MgO + ZnO | < 0,3 |
| SrO | 0-2,0 |
| BaO | 0-3,5 |
| BaO₃ | 0-4,0 |
| Al₂O₃ | 19,0 - 27,0 |
| SiO₂ | 55,0 - 66,0 |
| TiO₂ | 1,0 - 5,5 |
| ZrO₂ | 0-2,5 |
| Σ TiO₂ + ZrO₂ | 3,0 - 6,0 |
| P₂O₅ | 0-8,0 |
| Fe₂O₃ | < 200 ppm |
| F | 0-0.6 |
ainsi qu'éventuellement au moins un agent d'affinage, par exemple As₂O₃, Sb₂O₃, SnC₂, CeO₂ et que des composés de sulfate et de chlorure.

5. Procédé selon la revendication 4, qui utilise une vitrocéramique à haute teneur en cristaux mixtes de quartz comme phase cristalline principale, dont la dilatation thermique dans la plage de température entre 20°C et 300°C est < 0,5 . 10⁻⁶/K, dont la transmission dans l'infrarouge proche à 1 050 nm est > 87 % et de préférence > 89 % pour une épaisseur de 4 mm et dont la composition contient en % en poids par rapport à la composition totale :
| | |
|---|---|
| Li₂O | 3,0 - 5,0 |
| Na₂O | 0 - 2,0 |
| K₂O | 0 - 1,5 |
| Σ Na₂O + k₂O | 0,5 - 2,5 |
| Σ SrO + BaO | < 4,0 |
| Σ TiO₂ + ZrO₂ | 3,5 - 5,5 |
| Σ B₂O₃ + P₂O₅ | 1,0 - 8,0 |
| Fe₂O₃ | <130 ppm |
| F | 0-0,3 |
et éventuellement au moins un agent d'affinage, par exemple As₂O₃, Sb₂O₃, SnO₂, CeO₂ et des composés de sulfate et de chlorure.

6. Procédé selon la revendication 4, qui utilise une vitrocéramique dont la composition contient en % en poids par rapport à la composition total :
| | |
|---|---|
| Li₂O | 3,0-5,0 |
| Na₂O | 0-2,0 |
| K₂O | 0-1,5 |
| Σ Na₂O + K₂O | 0,5 - 2,0 |
| Σ SrO + BaO | < 3,0 |
| B₂O₃ | 0-3,0 0 |
| Al₂O₃ | 21,0 - 27,0 |
| TiO₂ | 1,5 - 5,5 |
| Σ TiO₂ + ZrO₂ | 3,5 - 5,5 |
| Σ B₂O₃ + P₂O₅ | 1,0 - 8,0 |
et éventuellement au moins un agent d'affinage, par exemple As₂O₃, Sb₂O₃, SnO₂, CeO₂ et des composés de sulfate et de chlorure.

7. Procédé selon la revendication 4, qui utilise une vitrocéramique dont la composition contient en % en poids par rapport à la composition totale :
| | |
|---|---|
| Li₂O | 3,5 - 5,0 |
| Na₂O | 0 - 2,0 |
| K₂O | 0 - 1,5 |
| Σ Na₂O+K₂O | 0,5 - 2,5 |
| Σ SrO+BaO | 1,0 - 4,0 |
| Al₂O₃ | 20 - 25 |
| SiO₂ | 55 - 63 |
| TiO₂ | 1,5 - 5,5 |
| ZrO₂ | 0 - 2,0 |
| Σ TiO₂ + ZrO₂ | 3,5 - 5,0 |
| P₂O₅ | 1,0 - 8, 0 |
| Σ B₂O₃ + P₂O₅ | 2,0 - 8,0 |
et éventuellement au moins un agent d'affinage, par exemple As₂O₃, Sb₂O₃, SnO₂, CeO₂ et des composés de sulfate et de chlorure.

8. Procédé selon l'une des revendications 4 à 7, qui utilise une vitrocéramique dans laquelle la taille moyenne des cristallites est < 300 nm et de préférence < 80 nm.

9. Procédé selon l'une des revendications 4 à 8, qui utilise une vitrocéramique qui présente à la surface une couche vitreuse d'une épaisseur pouvant atteindre 1,5 µm et dont les teneurs en Na₂O, K₂O et/ou SrO et BaO sont plus élevées, l'augmentation de la rugosité de surface lors de la céramisation de la vitrocéramique par rapport au verre initial étant inférieure à 10 nm et de préférence inférieure à 5 nm.

10. Procédé selon l'une des revendications 4 à 9, qui utilise une vitrocéramique qui contient en outre au moins un oxyde coloré qui absorbe dans le visible, qui absorbe peu ou pas du tout dans l'infrarouge proche, de préférence V₂O₅.

11. Procédé selon l'une des revendications 4 à 10, qui utilise une vitrocéramique qui présente une haute tenue vis-à-vis de la température et de la durée de compactage < 60 µm/100 mm après un recuit à 600°C pendant 200 h.

12. Procédé selon l'une des revendications 4 à 11, qui utilise une vitrccéramique qui présente une haute transmission dans l'IR, supérieure à > 85 % et de préférence > 87 % pour une épaisseur de 4 mm dans la plage de longueur d'onde comprise entre 900 nm et 1 800 nm.

13. Procédé selon l'une des revendications 4 à 12, qui utilise une vitrocéramique qui présente une transmission de la lumière de la vitrocéramique > 50 % et de préférence > 85 % pour une épaisseur de 4 mm.
